# FASCICULE DE BREVET EUROPEEN

(11) **EP 1 865 140 B1**
(45) Date de publication et mention de la délivrance du brevet: **07.05.2014**
(21) Numéro de dépôt: 07301087.8
(22) Date de dépôt: 06.06.2007
(51) Int. Cl.: E05F 15/14, F16H 25/02, F16H 25/08, F16H 21/18

(54) **Dispositif d'entraînement en ouverture ou en fermeture d'un ouvrant coulissant, et ouvrant coulissant équipé d'un tel dispositif d'entraînement**
Antriebsvorrichtung zum Öffnen oder Schließen eines Schiebeelements und Schiebeelement, das mit einer solchen Antriebsvorrichtung ausgestattet ist
Device for powering the opening or closing of a sliding door and sliding door equipped with such a powering device

(30) Priorité: 06.06.2006 FR 0652021
(43) Date de publication de la demande: 12.12.2007
(73) Titulaire: BUBENDORFF, 68220 Attenschwiller (FR)
(72) Inventeur: Valembois, Guy, 31700 Blagnac (FR)
(74) Mandataire: Rhein, Alain

(56) Documents cités:
- EP-A1- 0 768 477
- EP-A2- 0 770 795
- EP-A2- 1 325 996
- US-A- 5 582 068

## Description

La présente invention a pour objet un dispositif d'entraînement en ouverture ou en fermeture d'un ouvrant coulissant de porte, portail, fenêtre, volet roulant ou analogue, ainsi qu'un ouvrant coulissant équipé d'un tel dispositif d'entraînement.

On connaît de nombreux dispositifs permettant d'entraîner en translation un ouvrant coulissant dans un but d'ouverture ou de fermeture. Ces dispositifs comprennent un moyen moteur associé à un moyen permettant de transmettre un mouvement du dormant vers l'ouvrant, ou inversement. Les dispositifs les plus fréquents sont ceux dont les moyens de transmissions consistent en des câbles ou chaînes qui sont enroulés ou déroulés, ou bien ceux qui comprennent une roue ou analogue montée en friction avec un chemin de guidage qui consiste généralement en une crémaillère tandis que ladite roue consiste en un pignon qui engrène ladite crémaillère.

De telles constructions ne sont pas adaptées à toutes les applications, que ce soit pour des raisons de fiabilité, ou bien d'esthétisme par manque de compacité.

La publication EP768477 décrit un mécanisme d'entraînement qui est considéré comme état technique le plus proche, notamment par les caractéristiques suivantes:
il comprend des peignes comportant chacun au moins un bord rectiligne muni d'une succession régulière de crans, et un moyen moteur apte à entraîner chacun desdits peignes ou analogues d'une part dans un même mouvement de translation circulaire, et d'autre part en sorte que le mouvement de chacun desdits peignes soit déphasé par rapport à celui du ou des autres peignes, de manière que chacun desdits peignes, alternativement avec le ou les autres peignes, soit apte à venir engrener et désengrener, au travers de son bord muni de crans, au moins un élément, en sorte d'obtenir un mouvement relatif dudit élément par rapport audit moyen moteur.

La présente invention a pour but de proposer un dispositif d'entraînement en ouverture ou en fermeture d'un ouvrant coulissant de porte, portail, fenêtre, volet roulant ou analogue, qui est d'une conception simple, ainsi que d'une grande compacité et d'une grande fiabilité, tout en offrant des solutions de verrouillage simples et efficaces, aussi bien en position fermée et ouverte que dans une position intermédiaire.

Le dispositif d'entraînement en ouverture ou en fermeture d'un ouvrant coulissant de porte, portail, fenêtre, volet roulant ou analogue, selon l'invention, est du type comprenant un moyen moteur associé à un moyen de transmission de mouvement entre le dormant et l'ouvrant, et il se caractérise essentiellement en ce qu'il comprend des peignes comportant chacun un bord rectiligne muni d'une succession régulière de crans, et un moyen moteur apte à entraîner, au travers d'un système à vilebrequins, lesdits peignes d'une part dans un même mouvement de translation circulaire, et d'autre part en sorte que le mouvement de chacun desdits peignes soit déphasé par rapport à celui du ou des autres peignes, de manière que chacun desdits peignes, alternativement avec le ou les autres peignes, soit apte à venir engrener et désengrener, au travers de son bord muni de crans, au moins un élément, en sorte d'obtenir un mouvement relatif dudit élément par rapport audit moyen moteur; l'ouvrant portant soit ledit moyen moteur, soit ledit élément.

De manière préférentielle, mais non limitative, le dispositif d'entraînement est solidaire du dormant tandis que l'ouvrant comporte un élément apte à être engrené, ou bien plusieurs.

Le mouvement de translation circulaire comprend deux composantes, l'une parallèle au sens de déplacement de l'ouvrant, l'autre perpendiculaire, cette dernière permet l'engrènement et le désengrènement, tandis que la première permet l'entraînement de l'ouvrant lorsqu'il est engrené.

Selon une caractéristique additionnelle du dispositif d'entraînement selon l'invention, les peignes sont au moins au nombre de trois, et le déphasage de mouvement le plus important entre deux peignes est inférieur à 180°, de préférence les peignes sont au nombre de trois et le déphasage égal à 120°.

Une telle configuration autorise de toujours maintenir l'élément en prise, en sorte que l'ouvrant le soit également.

Selon une autre caractéristique additionnelle du dispositif d'entraînement selon l'invention, le système à vilebrequins comprend au moins deux vilebrequins calés et entraînés en rotation dans le même sens, et constitués chacun d'excentriques, autant que de peignes, montés excentrés par rapport à l'axe de rotation du vilebrequin qui les porte, s'étendant dans des plans parallèles différents, et aptes à chacun tourillonner dans une lumière pratiquée dans le peigne correspondant.

Selon une autre caractéristique additionnelle du dispositif d'entraînement selon l'invention, chacun des excentriques se présente sous la forme d'un disque.

Chacun des disques constitue ainsi, outre le moyen d'entraînement d'un disque, un plan de guidage et de glissement au (x) peignes (s) voisin(s).

Selon une variante du dispositif d'entraînement selon l'invention, chacun des excentriques se présente sous la forme d'un bras radial portant en extrémité un pivot tourillonnant dans un peigne.

Selon une autre caractéristique additionnelle du dispositif d'entraînement selon l'invention, il comporte plusieurs éléments destinés à être engrenés par les peignes, espacés deux à deux d'une distance correspondant à la distance séparant deux crans quelconques d'un peigne.

Une telle construction permet de déplacer l'ouvrant sur une distance supérieure à la longueur d'un peigne. La distance maximale de séparation de deux éléments étant bien entendu celle séparant les deux crans extrêmes d'un peigne.

Selon une autre caractéristique additionnelle du dispositif d'entraînement selon l'invention, il comporte un moyen de verrouillage consistant en au moins une pièce mobile, prévue apte à être disposée en sorte d'immobiliser au moins l'un des peignes.

Ainsi, de manière avantageuse, par le blocage de l'un des peignes, de préférence celui engrené, dans l'une quelconque des positions que lui font prendre le moyen moteur et le système à vilebrequins, et quelle que soit la position de l'ouvrant, on fige l'ensemble du dispositif sans qu'il soit nécessaire d'intervenir au niveau du moyen moteur, et donc sans qu'il soit nécessaire d'utiliser un moyen moteur présentant des caractéristiques particulières.

La présente invention a également pour objet un ouvrant coulissant de porte, portail, fenêtre, volet roulant ou analogue, équipé d'un dispositif d'entraînement en ouverture ou en fermeture, tel que défini précédemment.

Les avantages et les caractéristiques du dispositif d'entraînement en ouverture ou en fermeture d'un ouvrant coulissant selon l'invention, ressortiront plus clairement de la description qui suit et qui se rapporte au dessin annexé, lequel en représente un mode de réalisation non limitatif.

Dans le dessin annexé :
- la figure 1 représente une vue schématique en perspective d'un dispositif d'entraînement en ouverture ou en fermeture d'un ouvrant coulissant selon l'invention.
- la figure 2 représente une vue schématique en perspective et en éclaté d'une partie du même dispositif.
- les figures 3a, 3b, 3c, 3d, 3e, 3f et 3g, représentent des vues en plan du même dispositif dans des phases successives de fonctionnement.

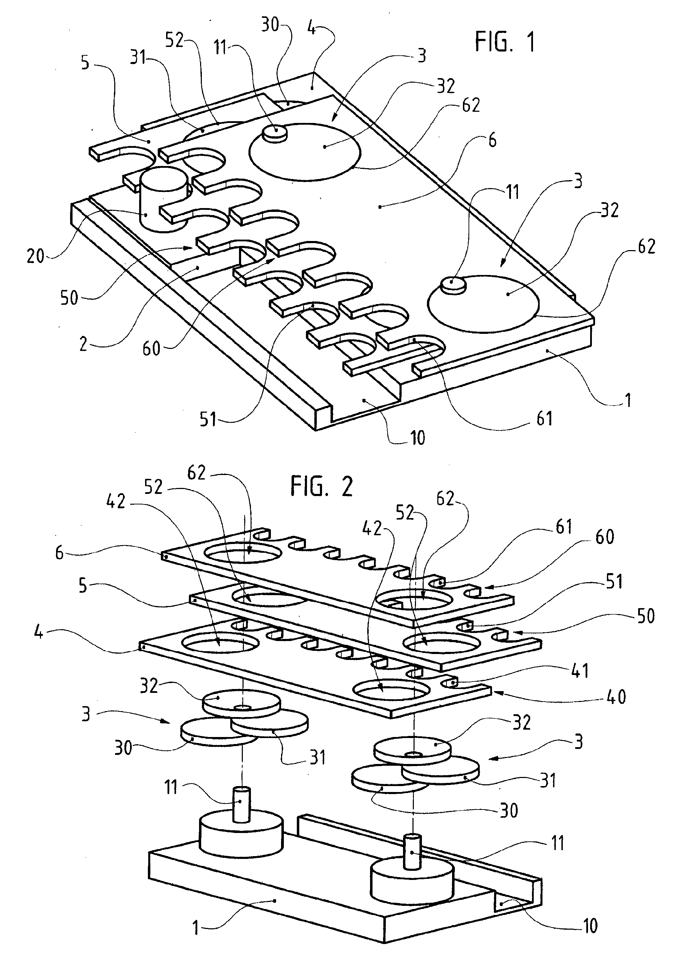

En référence à la figure 1, on peut voir que selon un mode de réalisation particulier, le dispositif d'entraînement en ouverture ou en fermeture d'un ouvrant coulissant de porte, portail, fenêtre, volet roulant ou analogue selon l'invention comprend un bâti 1 présentant une gorge 10 constituant une glissière pour un coulisseau 2 qui peut consister en un ouvrant à déplacer ou bien en une partie d'un ouvrant à déplacer.

On notera qu'inversement, le coulisseau 2 peut être solidaire du dormant, tandis que le bâti 1 peut être solidaire de l'ouvrant et se déplacer avec celui-ci.

En référence également à la figure 2, on peut voir que le bâti 1 comporte de plus deux arbres 11, perpendiculaires au plan de coulissement du coulisseau 2, alignés parallèlement à la gorge 10 et susceptibles d'être simultanément entraînés en rotation dans un même sens, et sur chacun desquels est destiné à être calé un vilebrequin 3.

Les vilebrequins 3 sont identiques, ils sont constitués chacun de trois disques excentriques 30, 31 et 32, de mêmes dimensions, rendus solidaires les un des autres, et décalés angulairement de 120°.

Le dispositif d'entraînement selon l'invention comprend également trois peignes identiques 4, 5 et 6, qui se présentent chacun sous la forme d'une plaque rectangulaire comprenant d'une part sur un bord, respectivement 40, 50 et 60, une succession régulière de crans, respectivement 41, 51 et 61 ; et d'autre part deux lumières rondes, respectivement 42, 52 et 62, de dimensions analogues à celles des disques excentriques 30, 31 et 32, alignées parallèlement au bord cranté 40, 50 et 60, et d'entraxe correspondant à celui des arbres 11.

On notera que les dimensions des disques excentriques 30, 31 et 32 et des lumières rondes 41, 51 et 61 sont déterminées en sorte de permettre aux premiers de tourillonner dans les secondes, et il peut être prévu par construction, pour favoriser les déplacements relatifs, une lubrification et/ou d'intercaler des roulements.

Le dispositif d'entraînement selon l'invention est constitué de l'assemblage des peignes 4, 5 et 6, sur les vilebrequins 3 eux-mêmes calés sur les arbres 11 de manière identique.

L'assemblage est réalisé de la manière suivante, les disques 30 sont logés dans les lumières 42 du peigne 4, les disques 31 sont logés dans les lumières 52 du peigne 5, et les disques 32 sont logés dans les lumières 62 du peigne 6.

On comprendra que la rotation des vilebrequins 3 entraîne chacun des peignes 4, 5 et 6 dans un mouvement de translation circulaire, le mouvement de chacun des peignes étant, du fait du décalage angulaire des disques 30, 31 et 32, déphasés par rapport au mouvement de chacun des deux autres.

On notera que le dispositif selon l'invention pourrait se présenter sous une autre forme, chacun des disques pouvant par exemple être remplacé par un bras radial à l'arbre 11, et portant en extrémité un pivot tourillonnant dans un peigne, avec toutefois l'inconvénient d'une moindre compacité.

Les dimensions des peignes 4, 5 et 6, et celles du bâti 1 et l'implantation des arbres 11, sont choisies en sorte que dans le mouvement de translation circulaire des peignes 4, 5 et 6, le bord cranté 40, 50 et 60, de ceux-ci vienne momentanément se positionner au-dessus de la gorge 10.

Le coulisseau 2 est par ailleurs muni supérieurement d'un doigt 20 qui s'étend perpendiculairement au plan de glissement du coulisseau 2, qui traverse les plans des trois peignes 4, 5 et 6, et qui présente des dimensions transversales complémentaires de celles des crans 41, 51 et 61, en sorte de pouvoir s'y engrener, de préférence étroitement.

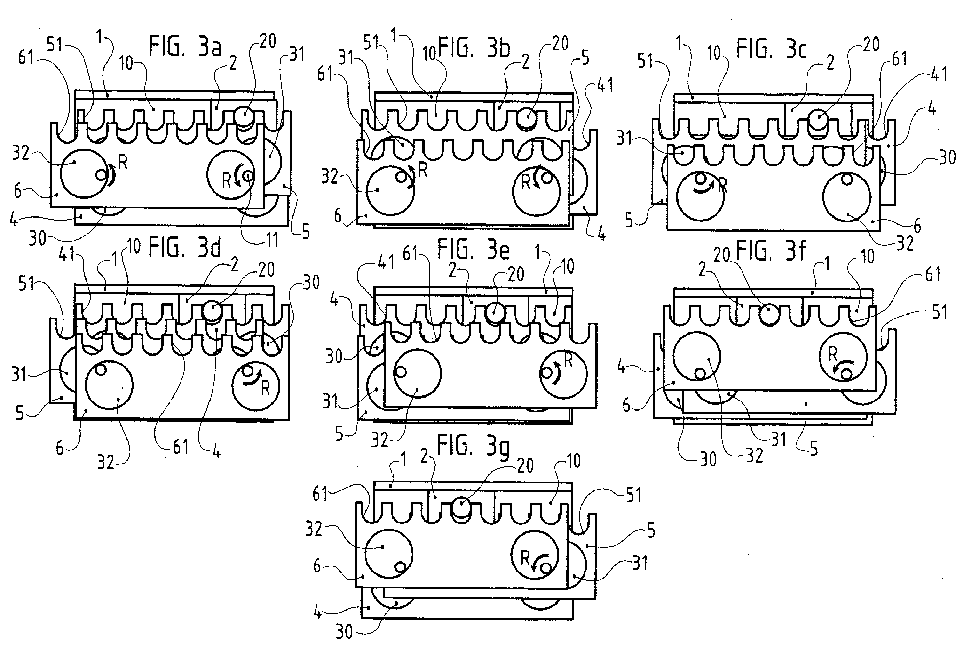

En référence maintenant aux figures 3a, 3b, 3c, 3d, 3e, 3f et 3g on peut voir des phases successives d'entraînement en translation du coulisseau 2 dans la glissière 10.

La translation circulaire déphasée des peignes 4, 5 et 6 permet à ceux-ci de venir alternativement engrener le doigt 20 et entraîner en coulissement le coulisseau 2. Le décalage de 120° permet l'engrènement d'un peigne se fasse avant le désengrènement du peigne engrené précédemment.

Ainsi, sur la figure 3a, le coulisseau 2 est à une extrémité de la glissière 10, et le doigt 20 est engrené sur un cran 51 du peigne 5, en l'occurrence le deuxième cran 51 à partir de l'extrémité du peigne 5 du côté de la position initiale du coulisseau 2.

Sur la figure 3b, après une rotation R du vilebrequin 3, en l'occurrence d'une valeur de 45°, chacun des crans 51 du peigne 5 décrit un arc de cercle, et celui avec lequel est engrené le doigt 20, entraîne ce dernier et donc le coulisseau 2.

Sur la figure 3c, le prolongement de la rotation R, également d'une valeur de 45°, entraîne le début du désengrènement du doigt 20 et du peigne 5, et de son engrènement avec le peigne 4. On notera que le doigt 20 se désengage du deuxième cran 51 du peigne 5, tandis qu'il s'engage dans le troisième cran 41 du peigne 4.

Sur les figures 3d et 3e, le doigt 20 et le peigne 5 sont entièrement désengrenés, tandis que le peigne 4 entraîne le coulisseau 2 en déplacement.

Sur la figure 3f le doigt 20 et le peigne 4 sont désengrenés, tandis que le peigne 6 entraîne le coulisseau 2. Le doigt 20 s'est désengagé du troisième cran 41 du peigne 4, pour s'engager dans le quatrième cran 61 du peigne 6.

Enfin sur la figure 3g, le peigne 6 commence à ce désengrener du doigt 20, alors que le peigne 5 commence à s'engrener sur le doigt 20 par son cinquième cran 51.

La rotation continue R des vilebrequins 3 permet ainsi de déplacer le coulisseau 2 de proche en proche, en utilisant successivement les peignes 4, 5 et 6.

Le coulisseau 2 peut ainsi décrire toute la longueur de la glissière 10, dans un sens ou dans l'autre, selon le sens de rotation des vilebrequins 3.

On peut envisager de déplacer un ouvrant sur une distance bien plus grande que la longueur de chacun des peignes, par exemple en allongeant la glissière 10 et en munissant l'ouvrant de doigts 20 espacés deux à deux au maximum de la distance séparant les deux crans extrêmes, en sorte que les peignes 4, 5 et 6 puissent les engrener successivement.

D'autre part, dans le mode de réalisation représenté l'ouvrant à déplacer, en l'occurrence le coulisseau 2, est guidé en coulissement rectiligne ce qui assure son engrènement avec les peignes 4, 5 et 6 mais il est possible d'envisager que l'ouvrant à déplacer ne soit pas guidé, et également qu'il ne se déplace pas uniquement de manière rectiligne. Il est par exemple possible que l'ouvrant à déplacer s'engrène par gravité dans les peignes 4, 5 et 6 qui alors s'étendent dans des plans verticaux, bords crantés dirigés vers le haut.

Le dispositif d'entraînement selon l'invention présente de nombreux avantages par rapport aux dispositifs existants, utilisant par exemple un dispositif à crémaillère, coopérant avec un pignon.

Ainsi, la profondeur d'engagement des dents du pignon dans celles de la crémaillère, et donc la rigidité de la liaison, dépend de la longueur desdites dents, et dépend donc fortement du diamètre dudit pignon, ce qui agit directement sur le rapport de démultiplication. Alors que pour le dispositif selon l'invention, la profondeur des crans 41, 51 et 61 n'est limitée que par la distance d'excentration des excentriques 30, 31 et 32.

Le dispositif d'entraînement selon l'invention permet de réaliser une liaison très rigide tout en étant compacte.

Par ailleurs, le verrouillage du dispositif peut être assuré, quelle que soit la position de l'ouvrant, au travers d'une pièce mobile apte à venir immobiliser l'un des peignes 4, 5 et 6, en venant par exemple prendre appui sur le bord opposé au bord cranté 40, 50 ou 60.

## Revendications

1. Dispositif d'entraînement en ouverture ou en fermeture d'un ouvrant coulissant de porte, portail, fenêtre, volet roulant ou analogue, du type comprenant un moyen moteur associé à un moyen de transmission de mouvement entre le dormant et l'ouvrant, où le dispositif comprend des peignes (4, 5, 6) comportant chacun un bord rectiligne (40, 50, 60) muni d'une succession régulière de crans (41, 51, 61), et un moyen moteur (11) apte à entraîner, au travers d'un système à vilebrequins (3), lesdits peignes (4, 5, 6) d'une part dans un même mouvement de translation circulaire, et d'autre part en sorte que le mouvement de chacun desdits peignes (4, 5, 6) soit déphasé par rapport à celui du ou des autres peignes (4, 5, 6), de manière que chacun desdits peignes (4, 5, 6), alternativement avec le ou les autres peignes (4, 5, 6), soit apte à venir engrener et désengrener, au travers de son bord (40, 50, 60) muni de crans (41, 51, 61), au moins un élément (20), en sorte d'obtenir un mouvement relatif dudit élément (20) par rapport audit moyen moteur (11).

2. Dispositif d'entraînement selon la revendication 1, **caractérisé en ce que** les peignes (4, 5, 6) sont au moins au nombre de trois, et le déphasage de mouvement le plus important entre deux peignes (4, 5, 6) est inférieur à 180°.

3. Dispositif d'entraînement selon la revendication 1 ou la revendication 2, **caractérisé en ce que** les peignes (4, 5, 6) sont au nombre de trois, et le déphasage de mouvement entre deux peignes (4, 5, 6) est de 120°.

4. Dispositif d'entraînement selon l'une quelconque des revendications précédentes, **caractérisé en ce que** le système à vilebrequins (3) comprend au moins deux vilebrequins (3) calés et entraînés en rotation dans le même sens, et constitués chacun d'excentriques (30, 31, 32), autant que de peignes (4, 5, 6), montés excentrés par rapport à l'axe de rotation du vilebrequin (3) qui les porte, s'étendant dans des plans parallèles différents, et aptes à chacun tourillonner dans une lumière (42, 52, 62) pratiquée dans le peigne (4, 5, 6) correspondant.

5. Dispositif d'entraînement selon la revendication 4, **caractérisé en ce que** chacun des excentriques se présente sous la forme d'un disque (30, 31, 32).

6. Dispositif d'entraînement selon la revendication 4 ou la revendication 5, **caractérisé en ce que** chacun des excentriques se présente sous la forme d'un bras radial portant en extrémité un pivot tourillonnant dans un peigne (4, 5, 6).

7. Dispositif d'entraînement selon l'une quelconque des revendications précédentes, **caractérisé en ce qu'**il comporte plusieurs éléments (20) destinés à être engrenés par les peignes (4, 5, 6), espacés deux à deux d'une distance correspondant à la distance séparant deux crans (41, 51, 61) quelconques d'un peigne (4, 5, 6).

8. Dispositif d'entraînement selon l'une quelconque des revendications précédentes, **caractérisé en ce qu'**il comporte un moyen de verrouillage consistant en au moins une pièce mobile, prévue apte à être disposée en sorte d'immobiliser au moins l'un des peignes (4, 5, 6).

9. Ouvrant coulissant de porte, portail, fenêtre, volet roulant ou analogue, **caractérisé en ce qu'**il est équipé d'un dispositif d'entraînement en ouverture ou en fermeture selon l'une quelconque des revendications précédentes.

## Patentansprüche

1. Antriebsvorrichtung zum Öffnen und Schließen eines Schiebeflügels einer Tür, eines Tors, Fensters, Rollladens oder dergleichen, der Art umfassend eine Motoreinrichtung, die einer Einrichtung zur Übertragung der Bewegung zwischen dem festen Rahmen und dem Flügelrahmen zugeordnet ist, wobei die Vorrichtung Kämme (4, 5, 6) umfasst, die jeweils eine geradlinige Kante (40, 50, 60) umfassen, die mit einer regelmäßigen Folge von Einkerbungen (41, 51, 61) versehen ist, und eine Motoreinrichtung (11), die geeignet ist, um über ein Kurbelwellensystem (3) die Kämme (4, 5, 6) einerseits in einer selben kreisförmigen Translationsbewegung und andererseits so anzutreiben, dass die Bewegung von jedem der besagten Kämme (4, 5, 6) versetzt bezüglich derjenigen des oder der anderen Kämme (4, 5, 6) sei, so dass jeder der besagten Kämme (4, 5, 6) alternativ mit den anderen Kämme (4, 5, 6) geeignet ist, um durch seine Kante (40, 50, 60), die mit Einkerbungen (41, 51, 61) versehen ist, mit mindestens einem Element (20) so in und außer Eingriff zu kommen, dass eine Relativbewegung des besagten Elements (20) relativ zu der Motoreinrichtung (11) erhalten wird.

2. Antriebsvorrichtung nach Anspruch 1, **dadurch gekennzeichnet, dass** die Kämme (4, 5, 6) zumindest drei an der Zahl sind, und der wichtigste Versatz der Bewegung zwischen zwei Kämme (4 , 5, 6) weniger als 180° beträgt.

3. Antriebsvorrichtung nach Anspruch 1 oder Anspruch 2, **dadurch gekennzeichnet, dass** die Kämme (4, 5, 6) drei an der Zahl sind, und der Versatz der Bewegung zwischen zwei Kämmen (4, 5 ,6) 120° beträgt.

4. Antriebsvorrichtung nach irgendeinem der vorhergehenden Ansprüche, **dadurch gekennzeichnet, dass** das Kurbelsystem (3) wenigstens zwei Kurbelwellen (3) umfasst, die drehfest sind und in der gleichen Richtung in Drehung angetrieben werden, und jeweils aus Exzentern (30, 31, 32) in gleicher Anzahl als die Kämme (4, 5, 6) bestehen, die exzentrisch bezüglich der Drehachse der Kurbelwelle, die sie trägt, gelagert sind und sich in unterschiedlichen parallelen Ebenen erstrecken, und jeweils geeignet sind, um in einer in dem entsprechenden Kamm (4, 5, 6) vorgesehenen Öffnung (42, 52, 62) zu drehen.

5. Antriebsvorrichtung nach Anspruch 4, **dadurch gekennzeichnet, dass** jeder der Exzenter als eine Scheibe (30, 31, 32) ausgestaltet ist.

6. Antriebsvorrichtung nach Anspruch 4 oder Anspruch 5, **dadurch gekennzeichnet, dass** jeder der Exzenter als ein radialer Arm ausgestaltet ist, der an seinem Ende einen Drehzapfen trägt, der in einem Kamm (4, 5, 6) dreht.

7. Antriebsvorrichtung nach einem der vorhergehenden Ansprüche, **dadurch gekennzeichnet, dass** sie mehrere Elemente (20) umfasst, die dazu bestimmt sind, mit den Kämmen (4, 5, 6) in Eingriff zu kommen, die paarweise um einen Abstand beabstandet sind, der dem Abstand zwischen irgendwelchen zwei Kerben (41, 51, 61) eines Kamms (4, 5, 6) entspricht.

8. Antriebsvorrichtung nach einem der vorhergehenden Ansprüche, **dadurch gekennzeichnet, dass** sie ein Verriegelungsmittel umfasst, das aus mindestens einem beweglichen Teil besteht, der geeignet vorgesehen ist, um so angeordnet zu werden, das es zumindest einen der Kämme (4, 5, 6) unbeweglich macht.

9. Schiebeflügel Tür, Tor, Fenster, Rollladen oder dergleichen, **dadurch gekennzeichnet, dass** er mit einer Antriebsvorrichtung zum Öffnen und Schließen nach einem der vorhergehenden Ansprüche ausgestattet ist.

## Claims

1. Device for driving in opening or closing a sliding leaf of a door, gate, window, roller shutter or the like, of the type comprising driving means associated with means for transmitting a movement between the sash-frame and the leaf, wherein the device comprises combs (4, 5, 6), each having a rectilinear edge (40, 50, 60) provided with a regular succession of notches (41, 51, 61), and motor means (11) capable of driving, through a crankshaft system of (3), said combs (4, 5, 6) on the one hand in one and the same circular translation movement, and on the other hand so that the movement of each of said combs (4, 5, 6) is shifted with respect to the other comb or combs (4, 5, 6) so that each of said combs (4, 5, 6), alternately with the other comb or combs (4, 5, 6) is capable of engaging in and disengaging, through its edge (40, 50, 60) provided with notches (41, 51, 61), from at least one element (20), so as to achieve a relative movement of said member (20) with respect to said motor (11).

2. Driving device according to claim 1, wherein the combs (4, 5, 6) are at least three in number, and the most important shift in movement between two combs (4, 5, 6) is less than 180°.

3. Driving device according to claim 1 or claim 2, wherein the combs (4, 5, 6) are three in number, and the shift of motion between two combs (4, 5, 6) is 120°.

4. Driving device according to any of the preceding claims, wherein the crankshaft system (3) comprises at least two crankshafts (3) blocked and driven in rotation in the same direction, and each formed of eccentric parts (30, 31, 32), in the same number as the combs (4, 5, 6), mounted eccentrically with respect to the axis of rotation of the crankshaft, which carries them, extending in different parallel planes, and each capable of journaling in an opening (42, 52, 62) provided for in the corresponding comb (4, 5, 6).

5. Driving device according to claim 4, wherein each of the eccentric parts is in the form of a disc (30, 31, 32).

6. Driving device according to claim 4 or claim 5, wherein each of the eccentric parts is in the form of a radial arm carrying at its end a pivot journaling in a comb (4, 5, 6).

7. Driving device according to any of the preceding claims, wherein it includes several elements (20) aimed at being engaged by the combs (4, 5, 6), spaced two by two by a distance corresponding to the distance separating any two notches (41, 51, 61) of a comb (4, 5, 6).

8. Driving device according to any of the preceding claims, wherein it includes locking means comprised of at least one movable part designed capable of being arranged so as to immobilize at least one of the combs (4, 5, 6).

9. Siding leaf of a door, gate, window, rolling shutter or the like, wherein it is provided with a device for driving in opening or closing according to any of the preceding claims.
